# EUROPEAN PATENT APPLICATION

(11) **EP 0 798 795 A2**
(43) Date of publication of application: **01.10.1997**
(21) Application number: 97105037.2
(22) Date of filing: 25.03.1997
(51) Int. Cl.: H01M 4/26, H01M 4/80, H01M 4/32, H01M 4/62

(54) **Secondary battery electrodes, process for producing the same and fluororesin coaters employed for producing the same**

(30) Priority: 25.03.1996 JP 68678/96; 22.08.1996 JP 221322/96
(71) Applicant: FURUKAWA DENCHI KABUSHIKI KAISHA, Yokohama-shi, Kanagawa-ken (JP)
(72) Inventor: Shioda, Yuji, c/o Iwakijigyosho, Shimofunao-machi, Iwaki-shi, Fukushima (JP); Yoshinaga, Kiyotada, c/o Iwakijigyosho, Shimofunao-machi, Iwaki-shi, Fukushima (JP); Sho, Hitoshi, c/o Iwakijigyosho, Shimofunao-machi, Iwaki-shi, Fukushima (JP); Kato, Hitoshi, c/o Iwakijigyosho, Shimofunao-machi, Iwaki-shi, Fukushima (JP); Suzuki, Toshikazu, c/o Iwakijigyosho, Shimofunao-machi, Iwaki-shi, Fukushima (JP); Shirakawa, Ryotomo, C/o Iwakijigyosho, Shimofunao-machi, Iwaki-shi, Fukushima (JP)
(74) Representative: Modiano, Guido, Dr.-Ing.

(57) **Abstract**

There are provided a secondary battery electrode in which dropping out of an active material and separation of a lead hardly occur during charging and discharging, a process for producing the sane and a fluororesin coater employed for producing the same; the secondary battery electrode consisting of a plate-like metal foam having a recess formed by compressing the surface of the metal foam partly depthwise at the upper end portion, a metal strip fixed to the recess and an active material carried on the entire plate-like metal foam is further coated at least on the peripheral end faces and on the metal strip fixed portion of the plate-like metal foam with a fluororesin.

## Description

### BACKGROUND OF THE INVENTION

### Field of the Invention

The present invention relates to a secondary battery electrode to be incorporated as electrodes into closed alkaline secondary batteries such as nickel-zinc secondary batteries, nickel-cadmium secondary batteries and nickel-hydrogen secondary batteries and to a process for producing the same, as well as, to a fluororesin coater employed for producing the same. More particularly, the present invention relates to an electrode which can constitute a secondary battery having excellent charge and discharge cycle life characteristics, in which dropping out of an active material powder carried on a collector is designed not to occur readily, particularly at the upper end portion of the electrode where a metal strip serving as a lead is fixed, so as to effectively avoid internal short-circuiting and to a process for producing it, as well as, to a fluororesin coater employed for producing it.

### Description of the Related Art

For example, nickel-hydrogen secondary batteries are ecologically harmless and has large discharge capacities, so that they are put into practical uses in increasing numbers as drive power sources for various electric and electronic appliances.

The nickel-hydrogen secondary batteries include those having cylindrical overall shapes and those having rectangular overall shapes. The latter rectangular batteries generally have a structure as described below.

A plurality of anode nickel electrodes and a plurality of cathode metal hydride (hydrogen absorbing alloy) electrodes are laminated alternately via separators having electrical insulating properties and liquid retaining properties such that the outermost layers may be the metal hydride electrodes to form a rectangular parallelepipedic electrode groups. The electrode group is introduced together with an alkaline electrolyte into a conductive can having a closed bottom, serving also as a cathode terminal, through the upper opening, and the upper opening of the can is then sealed.

While sintered nickel electrodes have been conventionally employed mainly as the anodes to be incorporated into the secondary batteries, an increasing number of paste type nickel electrodes are recently employed widely, because they can be allowed to have large discharge capacities in spite of their small sizes.

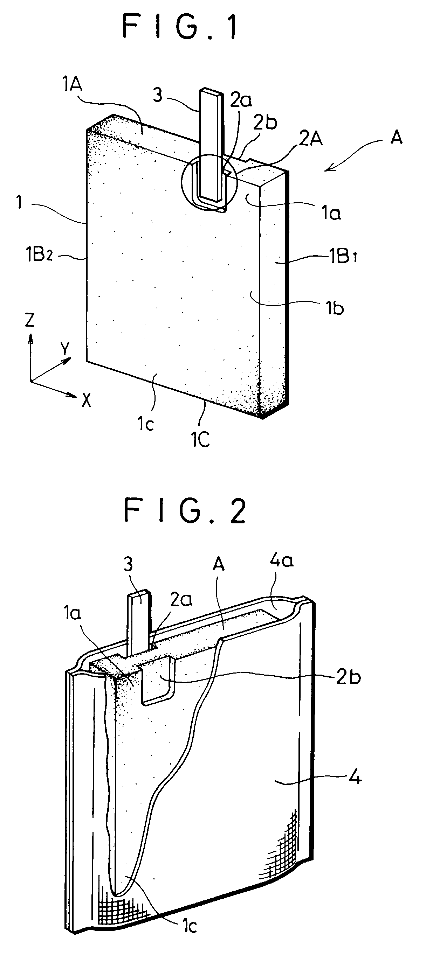

Such paste type nickel electrode A usually consists of a plate-like metal foam 1 having a three-dimensional reticular structure with predetermined dimensions in the X direction (width), Y direction (depth) and Z direction (height), as shown in Figure 1, such as a nickel foam, serving as a collector which is compressed partly on the surface at the upper end portion 1a to form recesses 2a,2b each having a rectangular plan view, and a predetermined amount of active material containing, for example, a nickel hydroxide powder as a major component carried in the gaps and on the surface of the metal foam 1. The positions where the recesses 2a,2b are formed are usually deviated a predetermined distance in the X direction from the center of the width (X) of the electrode A, and a metal strip 3 such as a nickel strip is fixed as a lead to one recess (recess 2a in Figure 1) by means of, for example, spot welding to form a metal strip fixed portion as indicated by the area 2A in Figure 1.

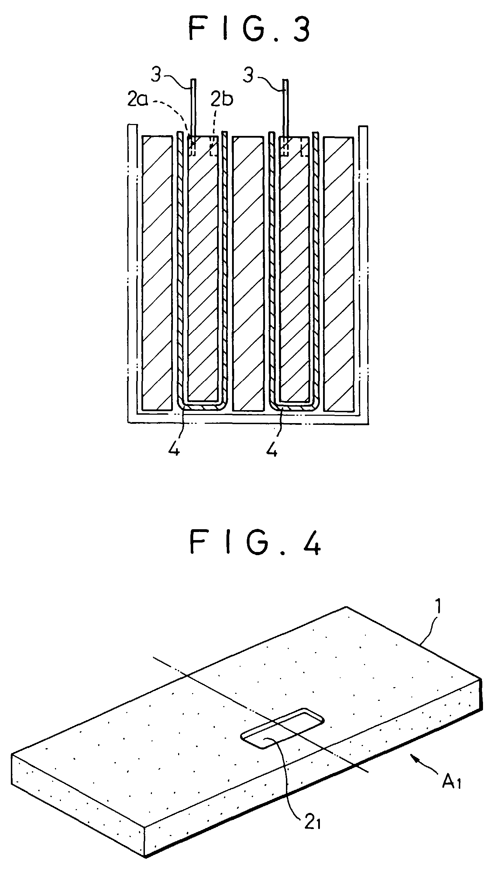

In order to constitute the electrode group as described above using such nickel electrodes A, a bag-like separator 4 having an opening only at the top, as shown in Figure 2, is provided, and a nickel electrode A shown in Figure 1 is housed in the separator 4 such that the upper end portion 1a, i.e. the metal strip fixed portion 2A, may direct upward to form a bag-like package. Such packages and metal hydride electrodes are arranged alternately as shown in Figure 3.

The nickel electrode A is generally produced as follows.

First, a powder of active material nickel hydroxide, an aqueous thickener solution containing a predetermined amount of thickener such as carboxymethyl cellulose dissolved therein and, as necessary, a powder of conductive material such as a carbonyl nickel powder and a cobalt monoxide powder are mixed in predetermined amounts to prepare an active material paste.

Meanwhile, a sheet of metal foam as the three-dimensional reticular structure is provided. As shown in Figure 4, this sheet A₁ has a surface area such that it can give an even number (two in Figure 4) of plate-like nickel electrodes A having the shape and dimensions as shown in Figure 1, and a compressed portion 2₁, having a shape formed by combining two recesses 2a (2b) of the nickel electrode A shown in Figure 1 in the Z direction, is formed at a predetermined position. Since these recesses 2₁ are usually formed by compressing the sheet A₁ at a predetermined position with a punch having a predetermined shape, the compressed portion has a high density compared with other portions at this point.

This sheet A₁ is subjected to a treatment of packing with the active material paste and then to drying treatment. Thus, the active material is secured in the internal gaps present in the sheet A₁ and also in the form of layer on the surface of the sheet A₁.

Subsequently, the sheet A₁ is subjected over the entire surface, for example, to rolling so as to adjust the overall thickness, as well as, to enhance adhesion between the gaps or the surface of the sheet A₁ and the active material secured therein or thereon, and thus the active material is carried on the sheet A₁.

Next, the sheet A₁ is cut (or punched) such that the compressed portion 2₁ may be halved as indicated by the imaginary line in Figure 4 to form plates having the shape and dimensions as shown in Figure 1 to which the metal strip 3 is not fixed yet. Accordingly, each of the thus formed plates inevitably has a pair of recesses 2a, 2b at one end portion, as shown in Figure 1.

Since the recesses 2a,2b of the thus obtained plate carry some active material powder in the gaps and on the surface, although the amount of the powder is not great compared with other portions, such active material powder is removed to expose the metal surface, and a metal strip 3 is spot welded thereto to form a metal strip fixed portion 2A and provide a nickel electrode A as shown in Figure 1.

It should be noted that this nickel electrode A is a precursor of the electrode to be produced according to the present invention.

In the thus obtained nickel electrode A, the metal foam sheet A₁ serving as a collector has a very high porosity of 82 to 97 %, so that the packing density of the active material is high, and thus a secondary battery incorporated with such electrodes comes to have a great discharge capacity, advantageously.

However, the active material (nickel hydroxide powder) carried on the metal foam is not excellent in the integrity of the particles and in the adhesion with the metal foam, giving rise to a problem as described below.

First, in the case of a nickel-hydrogen secondary battery, an irreversible reaction product, nickel γ-oxyhydroxide, is accumulated in the nickel hydroxide carried on the nickel foam in the process that the charge and discharge cycle is repeated, and thus the entire active material carried on the nickel foam undergoes expansion and deformation. This tendency appears notably in rapid charging.

Accordingly, the nickel hydroxide powder can drop out of the metal foam due to the influence of stress caused by such expansion and deformation to induce reduction in the capacity of the nickel electrode. When the amount of dropped-out active material is increased, it can cause short-circuiting between the nickel electrodes (anodes) and the cathodes to reduce the cycle life characteristics of the battery.

This dropping out of the active material occurs mainly on the cut surfaces of the plate appeared when the metal foam sheet A₁ is cut or punched into a predetermined shape and predetermined dimensions, i.e. the peripheral end faces 1A, 1B₁, 1B₂ and lC of the nickel electrode A shown in Figure 1.

Particularly, at the upper end portion 1a shown in Figure 1, dropping out of the active material proceeds conspicuously during charging and discharging, and it also happens that the metal strip 3 separates from the metal strip fixed portion 2A.

As a countermeasure for such problems, there is proposed a method (see Japanese Unexamined Patent Publication Nos. Sho 50-20235, Hei 4-248205, Hei 4-248265, etc.), in which a nickel hydroxide powder is admixed with a fluororesin to prepare an active material paste, and the paste is packed into a metal foam and dried, followed by rolling; and a method (see Japanese Unexamined Patent Publication No. Sho 60-131765), in which an active material paste is packed into a metal foam and dried, and the thus treated metal foam is subjected to pressurization, followed by coating of the entire surface of the metal foam with a fluororesin.

There is also proposed a method (see Japanese Patent Publication No. Hei 7-97494), in which a fused polyethylene is impregnated into the periphery of cut surfaces which appear when the sheet A₁ is cut so as to bind the active material; and a method (see Japanese Unexamined Patent Publication No. Hei 7-14576), in which a fluororesin suspension is applied onto the surface around the cut surfaces, followed by heat treatment at a temperature of about 130°C.

However, none of the prior art methods described above can exhibit sufficiently the effect of inhibiting dropping out of the active material. Particularly, since no countermeasure is taken against dropping out of the active material at the metal strip fixed portion at the upper end portion of the electrode and the portion around it, dropping out of the active material at such portion cannot be controlled effectively, disadvantageously.

Further, according to any of these prior art methods, since the plates obtained by cutting or punching are subjected to the above-described treatments individually, it can be said that these methods provide poor industrial productivity.

The phenomenon that the active material drops out and the phenomenon that the metal strip separates from the metal strip fixed portion are considered to be induced by the following factors.

For example, imagine an electrode A in service. In the initial stage of service, the electrode A is in service with the upper end portion 1a of the electrode A being exposed through the opening 4a of the bag-like separator 4, as shown in Figure 2, while the lower part of the side edge portion 1b and lower edge portion 1c being entirely enveloped by the separator 4. Accordingly, the lower part of the side edge portion 1b and the lower edge portion 1c of the electrode A as a whole assume a high resistance.

Therefore, while the electrode A is in service, the electric current applied and emitted to and from the electrode flows selectively through the upper end portion 1a of the electrode A. Accordingly, the current density at the upper end portion 1a of the electrode A is increased.

As for the current distribution at the metal strip fixed portion 2A which functions as an electrical connecting portion, conductor resistance is small in a portion of the recess 2a near a region where the metal strip 3 is fixed, and the edge of the recess produces the so-called edge effect. Accordingly, electric current is concentrated at the filling region with active material around the fixed metal strip 3 and at the edge region of the electrode, increasing the current density at the region.

As a result, nickel γ-oxyhydroxide is likely to be formed in the active material carried at the upper end portion 1a of the electrode A, and the active material undergoes great expansion and deformation with the formation of nickel γ-oxyhydroxide. Since the section at the upper end portion 1a is a cut surface appeared by cutting or punching as described above and has substantially no binder on it, dropping out of the active material develops seriously at this part. This phenomenon progresses conspicuously at the edge of the upper end portion 1a to which the electric current concentrates, causing internal short-circuiting.

Meanwhile, it can be also assumed that the following phenomenon happens during the operation of the electrode A at the metal strip fixed portion 2A. That is, even if both the metal foam and the metal strip secured to the recess of the metal foam are made of, for example, nickel, the self potential of the nickel constituting the metal foam and that of the nickel constituting the metal strip are different from each other.

Accordingly, the alkaline electrolyte, if permeated the portion 2A where the metal strip is fixed to the recess of the metal foam and the periphery around it, causes electrolytic corrosion between the recess of the metal foam and the metal strip which have different self potential values to loosen adhesion between them. In some worst cases, it can happen that the metal strip separates from the recess.

Accordingly, based on such assumption, the present inventors conceived that if at least the site where the metal strip is fixed is coated with a material having a capacity of binding the active material and also having high resistance, the upper end portion of the electrode comes to have an increased resistance to inhibit concentration of electric current thereto, and also the alkaline electrolyte can be prevented from permeating the metal strip fixed portion and around it, so that the active material can be prevented from dropping out of the electrode during charging and discharging, thus avoiding internal short-circuiting.

### SUMMARY OF THE INVENTION

It is an objective of the present invention to provide a secondary battery electrode, in which dropping out of an active material powder carried on it is controlled not to occur over the entire electrode, particularly at the upper end portion so as to prevent effectively short-circuiting from occurring, and it does not happen that a metal strip secured at a metal strip fixed portion separates therefrom and to a process for producing it, as well as, to a fluororesin coater employed for producing it.

In order to attain the intended objective, the present invention provides a secondary electrode consisting of a plate-like metal foam; a recess formed by compressing depthwise the surface of the plate-like metal foam partly at the upper end portion; a metal strip fixed portion formed by fixing a metal strip to the recess; an active material carried on the entire plate-like metal foam; and a fluororesin film formed to cover at least the metal strip fixed portion.

The present invention provides a secondary electrode in which the fluororesin film is particularly formed crosswise in the form of belt at least at the upper end portion including the metal strip fixed portion, or the fluororesin film is formed at least on the peripheral end faces and on the metal strip fixed portion of the plate-like metal foam.

The present invention also provides a process for producing a secondary battery electrode including steps of packing a metal foam sheet having a compressed portion formed at a predetermined position on the surface thereof with an active material paste, followed by drying; applying a fluororesin over the entire surface of the metal foam sheet, followed by drying; removing the active material and the fluororesin present in the compressed portion, and rolling the resulting sheet, followed by cutting or punching of the sheet into a plate having a predetermined shape such that the plate may have a recess at one end portion; fixing a metal strip to the recess of the plate and thus defining a metal strip fixed portion to provide an electrode; and coating the electrode with a fluororesin crosswise in the form of belt along the end portion including the metal strip fixed portion (hereinafter referred to as the first process).

The present invention further provides a process for producing a secondary battery electrode including steps of packing a metal foam sheet having a compressed portion formed at a predetermined position on the surface thereof with an active material paste, followed by drying; applying a fluororesin over the entire surface of the metal foam sheet, followed by drying; removing the active material and the fluororesin present in the compressed portion, and rolling the resulting sheet, followed by cutting or punching of the sheet into a plate having a predetermined shape such that the plate may have a recess at one end portion; fixing a metal strip to the recess of the plate and thus defining a metal strip fixed portion to provide an electrode; laminating a plurality of said electrode, and applying wear plates to the electrodes locating outermost respectively, the wear plates having a size sufficient to cover the surface of the electrode, followed by application of a pressure via the wear plates to the electrodes in the direction of lamination to form an electrode group in which the electrodes are brought into intimate contact with one another; and coating the electrode group with a fluororesin partly on the surface or over the entire surface, followed by disassembling of the group (hereinafter referred to as the second process).

Further, the present invention provides a coater for applying a fluororesin to an electrode consisting of a lower roll and an upper roll rotatable synchronously with the lower roll, which are arranged such that the roll surface of the former and that of the latter may oppose each other; an - electrode feeder which runs carrying an electrode thereon located between the lower roll and the upper roll; means for supplying a fluororesin suspension to the roll surface of the upper roll; and a groove defined at least on the roll surface of the upper roll.

### BRIEF DESCRIPTION OF THE DRAWINGS

Figure 1 is a perspective view showing an exemplary electrode A (i.e. an electrode precursor of the present invention) of the prior art;
Figure 2 is a partially cut-away perspective view showing the exemplary electrode A housed in a bag-like separator;
Figure 3 is a cross-sectional view showing anodes housed in bag-like separators respectively and cathodes which are laminated alternately;
Figure 4 is a perspective view showing an exemplary metal foam sheet to be employed for producing electrodes;
Figure 5 is a perspective view showing an exemplary electrode B1 produced according to the first process of the present invention;
Figure 6 is a front view of the coater according to the present invention;
Figure 7 is a side view of the coater according to the present invention;
Figure 8 is an explanatory view for explaining the state where an electrode is coated with a fluororesin using the coater of the present invention;
Figure 9 is an explanatory view for explaining the state where the metal strip fixed portion is coated with a fluororesin;
Figure 10 is a perspective view showing an exemplary electrode prepared according to the second process of the present invention; and
Figure 11 is a perspective view showing a state where a group of electrodes are formed to be coated with a fluororesin according to the second process of the present invention.

### DETAILED DESCRIPTION OF THE PREFERRED EMBODIMENTS

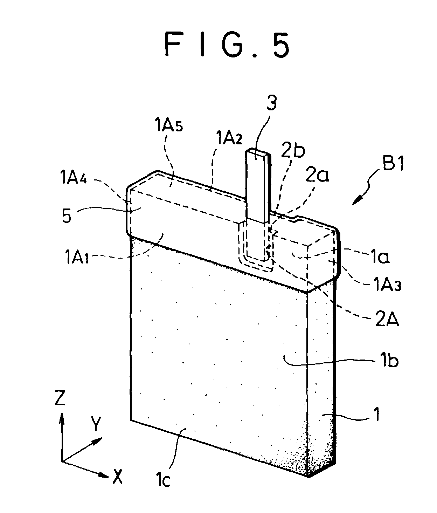

Figure 5 is a perspective view showing an exemplary electrode B1 produced according to the first process of the present invention. This electrode B1 is formed by coating the electrode A shown in Figure 1 with a fluororesin thin film 5 using an apparatus (to be described later) so that the upper end portion 1a of the metal foam 1 including the metal strip fixed portion 2A may be covered entirely. More specifically, the film 5 is formed so as to cover one face 1A₁ and the other face 1A₂ at the upper end portion including the metal strip fixed portion 2A crosswise in the form of belt (in the X direction), as well as, two lateral faces 1A₃, 1A₄ at the upper end portion 1a and the upper face 1A₅ of the metal foam 1 which are the cut faces appeared when the plate was cut or punched out of the sheet.

As described above, since the upper end portion 1a is covered with the fluororesin film 5 having electrical insulating properties and water repellency, not only the upper end portion 1a comes to have an increased electrical resistance and improved water repellency but also integrity of the active material particles present at the upper end portion 1a is improved. Thus, it does not happen in the electrode in service that electric current flows selectively to the upper end portion 1a to increase the current density there. Accordingly, formation of nickel γ-oxyhydroxide is minimized to inhibit expansion, deformation or dropping out of the active material which can be caused by accumulation of nickel γ-oxyhydroxide, causing no internal short-circuiting.

Further, at the metal strip fixed portion 2A, the metal strip 3 is buried at the recess 2a under the film 5, and permeation of the alkaline electrolyte into the metal strip fixed portion 2A is inhibited by the film 5 covering the entire upper end portion 1a, so that electrolytic corrosion hardly occurs between the metal strip 3 and the recess 2a, inhibiting separation of the metal strip 3 from the recess 2a.

It should be noted that, as described above, while the film 5 is most preferably formed to cover the entire upper end portion 1a, it should be formed at least on the face 1A₁ including the metal strip fixed portion 2A crosswise in the form of belt.

This electrode B1 is produced according to the first process described above.

That is, a metal foam sheet A₁ as shown in Figure 4 is first packed with an active material paste of a predetermined composition, followed by drying, according to the prior art methods described above.

Next, a fluororesin is applied over the entire surface of the thus treated sheet A₁ and dried so as to bind the active material with the fluororesin.

More specifically, the sheet may be immersed in a suspension of polytetrafluoroethylene, tetrafluoroethylene-hexafluoropropylene copolymer, perfluoroalkyl vinyl ether copolymer, ethylene chloride trifluoride resin, vinyl fluoride resin, etc. Usually, a suspension of tetrafluoroethylene having a concentration of 0.1 to 5 wt % is preferably employed. Subsequently, the active material and the fluororesin adhered to the compressed portion 2₁ are removed, for example, by means of brushing.

The thus treated sheet A₁ is then subjected, for example, to rolling to adjust the thickness and increase the packing density of the active material, as well as, to allow the active material to be carried on the sheet A₁ with the aid of the fluororesin applied on it already.

Next, this sheet A₁ is cut or punched to form a plate having a pair of recesses 2a,2b at one edge portion, and a metal strip 3 is fixed to the recess 2a (or 2b), for example, by means of spot-welding to form a metal strip fixed portion 2A and provide an electrode A (precursor) as shown in Figure 1.

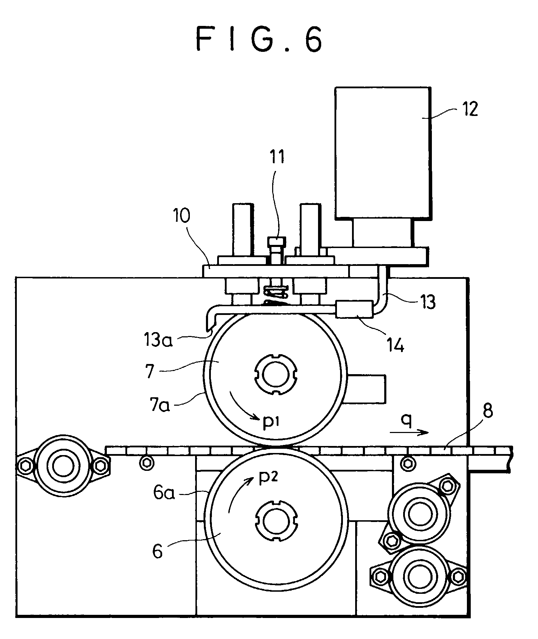

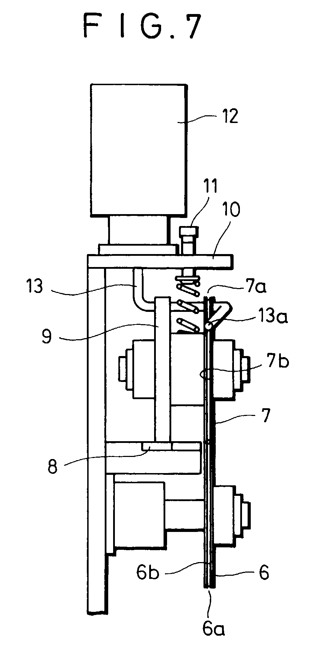

According to the first process of the present invention, the upper end portion 1a of the thus formed electrode A is coated with a fluororesin using the coater of the present invention as shown in front view in Figure 6 and in side view in Figure 7.

To describe first the coater, a lower roll 6 and an upper roll 7 which operates in synchronization with the lower roll 6 are disposed such that the roll surface 6a of the former and the roll surface 7a of the latter may oppose each other. The roll surfaces 6a, 7a are designed to have a width such that it may substantially cover the dimension X of the metal strip fixed portion 2A at the upper end portion 1a of the electrode A shown in Figure 1 or a width a little shorter than it. An electrode feeder 8 such as a conveyor which runs carrying thereon the electrode A is disposed between the surface 6a of the lower roll 6 and the surface 7a of the upper roll 7. Further, a press roller 9 is coaxially disposed behind the upper roll 7. The press roller 9 is adapted to be urged downward by a push spring mechanism 11 attached to an upper frame 10 so as to moderately press the electrode carried on the electrode feeder 8.

Accordingly, in this coater, when the lower roll 6 is rotated in the direction of the arrow p₂, the upper roll 7 is rotated synchronously in the direction of the arrow p₁, and the press roller 9 urged downward by the press spring mechanism 11 is also rotated like the upper roll 7 to drive the electrode feeder 8 so as to run in the direction of the arrow q.

The roll surface 6a of the lower roll 6 and the roll surface 7a of the upper roll 7 have grooves 6b and 7b having a desired width and a desired depth formed on the circumferences, respectively. More specifically, rings having grooves 6b,7b are formed using a rubbery material having an appropriate hardness, and these rings are fitted around rollers made, for example, of stainless steel.

A tank 12 containing a fluororesin suspension is mounted on the upper frame 10. A suspension supply pipe 13 having a flow control valve 14 is connected to the tank 12, and a nozzle tip 13a attached to the distal end of the pipe 13 is located adjacent to the roll surface 7a of the upper roll 7. As described above, these elements constitute a mechanism for feeding the fluororesin suspension contained in the tank 12 to the roll surface 7a of the upper roll.

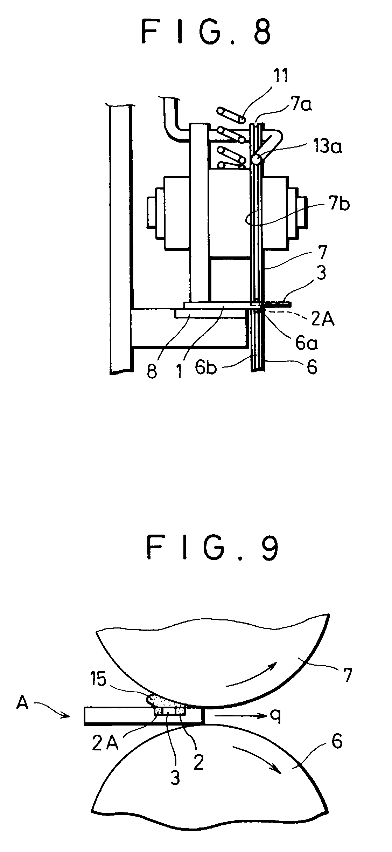

When the fluororesin is to be applied to the upper end portion 1a of the electrode A using this coater, the electrode A is loaded on the electrode feeder 8, as shown in Figure 8, and the lower roll 6 and the upper roll 7 are rotated.

In this instance, the electrode A is loaded such that the metal strip fixed portion 2A may direct upward and that the roll surface 7a of the upper roll 7 may oppose the metal strip fixed portion 2A. The electrode A is fed by the electrode feeder 8 in the direction of the arrow q shown in Figure 6 being pressed by the press roller 9 such that the metal strip fixed portion 2A may pass the gap between the roll surface 6a and the roll surface 7a being nipped lightly by them.

In this process, the fluororesin suspension is supplied in a predetermined amount controlled by the flow control valve 14 from the nozzle tip 13a to the groove 7b of the upper roll 7.

The fluororesin suspension 15 supplied to the groove 7b is applied to the upper end portion of the electrode A, and it also flows into the recessed portion 2 to bury the metal strip fixed portion 2A entirely, as shown in Figs 8 and 9. The extra portion of the suspension is discharged through the groove of the lower roll 6 to the bottom of the coater.

Thus, the electrode A is processed into an electrode B1 as shown in Figure 5.

The fluororesin suspension employable here includes suspensions of polytetrafluoroethylene, tetrafluoroethylene-hexafluoropropylene copolymer, perfluoroalkyl vinyl ether copolymer, ethylene chloride trifluoride resin, vinyl fluoride resin, etc. If the fluororesin concentration of such suspension is very low, the thickness of the resulting fluororesin film will be too small to exhibit the above-described effect sufficiently; whereas if it is very high, coating procedures become difficult to be unable to form a uniform film, and besides the reaction as the electrode can hardly occur. Based on such reasons, the fluororesin concentration of the suspension is preferably set to 5 to 50 wt %, more preferably 15 to 30 wt %.

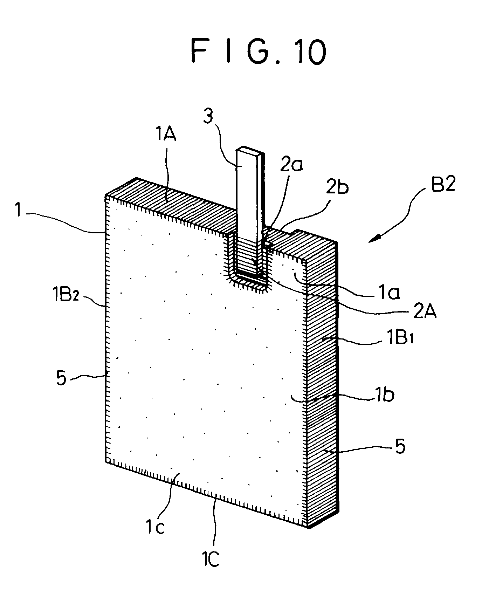

Figure 10 is a perspective view showing an exemplary electrode B2 prepared according to the second process of the present invention. In this electrode B2, an active material is carried on a plate-like metal foam 1 having a predetermined shape and predetermined dimensions, and a lead metal strip 3 is fixed to one of recesses 2a and 2b formed at the upper end portion.

Peripheral end faces 1A, 1B₁, 1B₂, 1C of the metal foam 1 are entirely covered with a fluororesin thin film 5, and both electrode surfaces are also covered with the fluororesin thin film 5 each at the rim over a width of about 1 mm. Accordingly, each edge of the metal foam 1 and the edges of the recesses 2a, 2b are also covered with the fluororesin thin film 5.

As described above, since the peripheral end faces 1A,1B₁,1B₂,1C and the rim of the electrode surfaces adjacent to the peripheral end faces are covered with the fluororesin thin film having electrical insulating properties and water repellency, even the active material particles exposed on the cut (punched) surfaces can be integrated by the fluororesin so that they may not drop out of the electrode.

Further, particularly at the upper end portion 1a, the fluororesin film 5 formed thereon acts to increase electrical resistance and to improve water repellency and also integrity of the active material particles.

Consequently, it is inhibited that electric current selectively flows to the upper end portion 1a during operation of the electrode to increase current density there, and thus formation of nickel γ-oxyhydroxide is minimized to inhibit expansion, deformation or dropping out of the active material which can be caused by accumulation of nickel γ-oxyhydroxide, causing no internal short-circuiting.

Furthermore, at the metal strip fixed portion 2A, since the metal strip 3 itself is coated with the fluororesin thin film, it is not brought into contact with the alkaline electrolyte. Further, since the recesses 2a,2b themselves and the edges thereof are also covered with the fluororesin film, the alkaline electrolyte does not permeate such portions. Thus, electrolytic corrosion is hardly induced between the metal strip 3 and the metal at the recess, preventing the metal strip 3 from separating from the metal strip fixed portion (recess).

The thus constituted electrode B2 can be produced according to the second process of the present invention. First, the electrode A is produced in the same manner as in the first process.

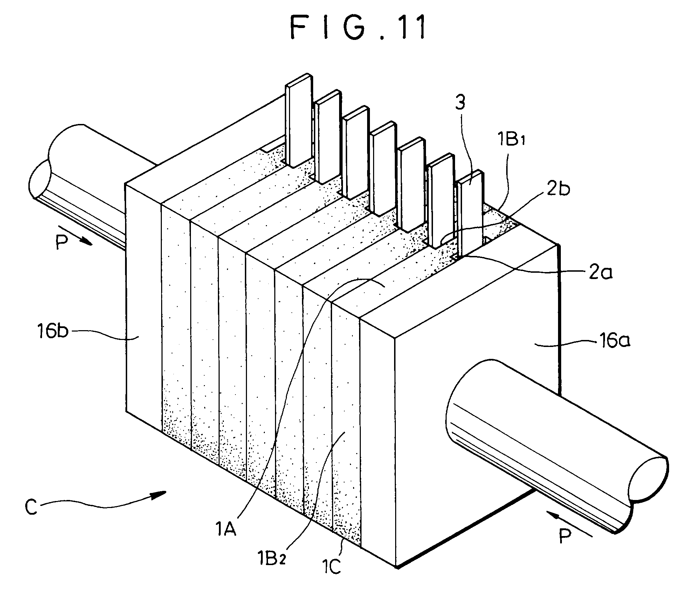

Next, as shown in Figure 11, a plurality of electrode precursors A (seven in Figure 11) thus formed are laminated one after another such that the electrode surfaces thereof may oppose one another.

Incidentally, referring to the number of electrodes A to be laminated, seven electrodes A are shown in Figure 11 so as to illustrate the basic concept of the present invention. However, the actual number of electrodes A to be laminated is preferably on the order of, for example, several hundred to several thousand, when industrial line operation is taken into consideration.

A pair of wear plates 16a,16b are applied on the outermost electrodes A respectively, and a pressure P is applied via the wear plates 16a,16b to the electrodes A in the direction of lamination. Incidentally, as the wear plates 16a,16b, those having surface areas substantially the same as those of the electrodes A or slightly bigger than them are employed.

The laminated electrodes A are brought into intimate contact with one another when they are pressed via the wear plates 16a,16b to form an electrode group C. In the thus formed electrode group C, the peripheral end faces 1A, 1B₁, 1B₂ or 1C of the electrodes thus assembled form a plane, and ditches having a predetermined depth and opening at the top are formed by the recesses 2a,2b, with a metal strip 3 protruding from each ditch.

While the electrode group C is maintained in the pressed state, a fluororesin is applied to the upper face, side faces, the bottom face and the ditches.

As a method of applying the fluororesin, a suspension of a desired fluororesin is first prepared, and the electrode group C may be subjected to spray coating using the suspension in the same manner as is carried out in an automotive body coating line or to brush coating. Alternatively, the entire electrode group C pressed between the wear plates 16a,16b may be as such immersed in the suspension.

However, care should preferably be taken that the metal strips 3 protruding from the electrode group C are applied with as little fluororesin as possible. If the metal strips 3 are applied with the fluororesin, their surface resistance increases, failing to serve as satisfactory leads. It is, therefore, necessary to remove the applied fluororesin at a later stage.

Incidentally, when the suspension is applied to the electrode group C, the metal strips 3 protruding from the electrode group C are preferably covered with a removable cap such as of a resin and a rubber so that the metal strips 3 may not be coated with the fluororesin and may not loose the function as leads. The metal strips 3 may be covered by caps individually, or they may be covered together by one cap.

The suspension employable here preferably is, for example, a dispersion adjusted such that the fluororesin concentration may be 50 wt % or less with water. A suspension having a fluororesin concentration of more than 50 wt % may be effective for preventing the active material from dropping out. However, it excessively covers the active material to lower its activity, causing deterioration in the battery characteristics.

According to any of the methods described above, the surface of the electrode group C is coated with the suspension, and the suspension also flows into the ditches in which the metal strips are located, so that the metal strips 3 are also coated with the suspension. Since the electrodes are brought into intimate contact with one another, the suspension hardly flows through the contact interfaces of the electrodes to the central area on the hidden surfaces of each electrode. If penetrated, the depth of penetration is at most 1 mm or less, although it depends on the viscosity of the suspension employed.

Finally, the pressure applied by the wear plates 16a,16b is released, and the electrode group C is disassembled, followed by drying of each plate. Thus, electrodes B2 according to the present invention, in which the peripheral end faces 1A,1B₁,1B₂,1C, rims of the electrode surfaces around the peripheral end faces, the recesses 2a,2b and the edges of the recesses 2a,2b are coated with the fluororesin as shown in Figure 10 can be obtained.

Incidentally, the drying treatment may be carried out after the electrode group C is disassembled as described above or before the electrode group C is disassembled.

### Examples 1 to 7, Comparative Example 1

### (1) Preparation of nickel electrode

To 100 parts by weight of a spherical nickel hydroxide powder having a grain distribution of 1 to 200 µm and containing 4 parts by weight of Zn and 1.5 parts by weight of Co solid-dissolved therein are added 10 parts by weight of a carbonyl nickel powder having a grain distribution of 0.5 to 10 µm, 5 parts by weight of a cobalt monoxide powder having a grain distribution of 0.5 to 30 µm, 50 parts by weight of an aqueous carboxymethyl cellulose solution having a concentration of 2 wt % and 0.6 part by weight of a suspension of polytetrafluoroethylene (PTFE) having a concentration of 60 wt %, and the resulting mixture was kneaded to prepare an active material paste.

Meanwhile, a nickel foam sheet with a porosity of 95 % having a rectangular compressed portion (length: 6 mm, width: 3 mm, depth: 0.15 mm) was provided, and the sheet was packed with the active material paste prepared above, followed by drying at a temperature of 120°C for 20 minutes.

Subsequently, the thus treated sheet was immersed in a PTFE suspension having a concentration of 1.5 wt % and withdrawn therefrom, and after the sheet was dried at 100°C for 20 minutes, the active material and PTFE deposited to the recesses were brushed off.

The resulting sheet was subjected to rolling under a pressure of 4 ton/cm² to shape the sheet to have a thickness of 0.6 mm. The rolled sheet was then punched to provide plates having a height of 48 mm, a width of 17 mm and a thickness of 0.6 mm. Each plate has on each side a recess (length; 3 mm, width 3 mm, depth 0.15 mm) formed by cutting the sheet crosswise along the center of the compressed portion. Then, a nickel strip is spot-welded to the recess of each plate to provide an electrode A shown in Figure 1.

Subsequently, the coater shown in Figures 6 and 7 was employed to apply a PTFE suspension having a concentration of 2 to 60 wt % as indicated in the following Table 1 to the upper end portion 1a of each electrode A by dropping the PTFE suspension from the nozzle tip 13a of the coater to the roll surface 7a of the upper roll 7.

Incidentally, in this coater, both the lower roll 6 and the upper roll 7 have an overall diameter of 100 mm. The cores of these rolls 6,7 are made of SUS which are covered respectively on the circumferences with roll surfaces 6a and 7a made of a rubbery material having a rubber hardness of 60_, a width of 5 mm and a thickness of 5 mm. The roll surfaces 6a, 7a have grooves 6b,7b having a width of 2 mm and a depth of 1 mm formed on the circumferences respectively.

Thus, as shown in Figure 5, electrodes B1 each of which is covered at the upper end portion 1a with a belt-like film 5 having a width about 1 mm longer than the length (3 mm) of the recess were obtained.

### (2) Assembly of battery

A hydrogen absorbing alloy having the following composition: MmNi_{3.2}CO_{1.0}Al_{0.2}Mn_{0.4} (wherein Mm means a misch metal) was pulverized into a powder having an average particle size of 65 µm. To 100 parts by weight of the powder thus obtained was added 5.26 parts by weight of a PTFE powder, and the resulting mixture was kneaded to make the PTFE powder fibrous, followed by addition of 15 parts by weight of water thereto to prepare a paste. The paste was clad to a punching nickel sheet (pore size: 1.5 mm, porosity 38 %, thickness 0.07 mm) on each surface and dried at a temperature of 80°C for 60 minutes, followed by rolling under a pressure of 3 ton/cm² to provide metal hydride electrodes having a thickness of 0.35 mm.

Meanwhile, separators to be incorporated into the battery were prepared as follows.

First, FT-310 (trade name, a polyolefinic nonwoven fabric web manufactured by Japan Vilene Co., Ltd.) was washed with water to remove nonionic surfactant deposited on the surface and dried. Next, the thus treated fabric web was immersed in a hot (100°C) conc. sulfuric acid having a concentration of 95 % for 30 minutes to effect sulfonation treatment on the surface. After the thus treated fabric web was washed fully with flowing water and dried at a temperature of 80°C for one hour, it was immersed in an aqueous sodium hydroxide solution having a concentration of 1 % for 5 minutes, followed by washing with water.

The thus obtained separators and the electrodes B1 were employed to provide bag-like packages as shown in Figure 2, which were then laminated alternately with the metal hydride electrodes to provide an electrode group. The electrode group was housed in a stainless steel can plated with nickel, and an electrolyte containing 0.6 N NaOH, 1N LiOH and 7N KOH was poured into the can. The can was then sealed to provide a rectangular nickel-hydrogen secondary battery having a thickness of 6 mm, a width of 17 mm, a height of 48 mm and a rated capacity of 600 mAh.

### (3) Examination of battery characteristics

Cycle life test was carried out against 1,000 sets of the thus assembled batteries, by repeating, at a temperature of 0°C, 500 times a cycle which was performed by charging at a current of 600 mA for 1.0 hour, discharging at a current of 600 mA for 1.25 hours such that the discharge end voltage may be 1V and a pause of 0.25 hour. The discharge capacity was measured, and the measured value was divided by the capacity at the initial stage of charging to calculate the mean value of the capacity retention rate (%).

Further, in the process of this cycle life test, presence and absence of short-circuiting were examined by measuring the electrode voltage or by X-ray analysis to calculate the percentage (%) of batteries underwent short-circuiting, and the results are indicated in terms of mean values in Table 1.

**Table 1**

| | PTFE concentration of suspension employed (wt %) | Battery characteristics | | |
|---|---|---|---|---|
| | | Charge capacity (mAh) | Short circuit percent defective (%, n=1000) | Capacity retention rate (%, n= 1000) |
| Example 1 | 2 | 600 | 1 | 70 |
| Example 2 | 5 | 600 | 0 | 95 |
| Example 3 | 10 | 600 | 0 | 97 |
| Example 4 | 20 | 600 | 0 | 97 |
| Example 5 | 30 | 600 | 0 | 97 |
| Example 6 | 50 | 600 | 0 | 97 |
| Example 7 | 60 | 550 | 0 | 97 |
| Comparative Example 1 | Not applied | 600 | 15 | 30 |

The results shown in Table 1 clarify the following points.
1) The batteries incorporated with the electrodes of the present invention all showed extremely reduced % occurrence of short-circuiting and high capacity retention rate measured after the 500 cycle test compared with the battery of Comparative Example 1. This demonstrates that the nickel hydroxide powder carried on the electrode B1 of the present invention has not dropped out in the process of charging and discharging. In other words, this demonstrates that the effect of the fluororesin film formed to cover the upper end portion of the electrode was notably exhibited.
2) However, when a PTFE suspension having a concentration of 60 wt % is employed for forming the film like in the electrode of Example 7, the resulting film becomes too thick to allow the electrode reaction to take place, although dropping out of the nickel hydroxide powder may be inhibited, and besides the discharge capacity cannot satisfy the rated capacity.

Meanwhile, if a PTFE suspension having a low concentration is employed like in the electrode of Example 1, the resulting film becomes very thin, and the effect of preventing the nickel hydroxide powder from dropping out is lowered, leading to a slightly increased short-circuit percent defective and reduced capacity retention rate.

Accordingly, the concentration of the PTFE suspension to be applied to the electrode A is preferably set in the range of 5 to 50 wt %.

As described above, in the electrode B1 of the present invention, dropping out of the active material powder carried thereon is inhibited to prevent effectively short-circuiting from occurring. This is the effect brought about by the fluororesin thin film having a high electrical resistance, water repellency and binding properties formed in the form of belt at the upper end portion of the electrode where the current density is increased during electrode reaction. Accordingly, the electrode B1 produced employing the coater of the present invention provides an extremely high industrial value as a secondary battery electrode having excellent charge and discharge cycle life characteristics.

### Examples 8 to 14, Comparative Examples 2 and 3

### (1) Preparation of nickel electrode

An active material paste was prepared by kneading 100 g of a spherical nickel hydroxide powder containing 4 wt% Zn and 1.5 wt% Co solid-dissolved therein and having a particle size of 5 to 50 µm, 10 g of a nickel powder having a particle size of 0.5 to 20 µm, 5 g of a cobalt monoxide powder having a particle size of 0.5 to 30 µm, 50 g of an aqueous carboxymethyl cellulose solution having a concentration of 2 wt % and 1 g of a PTFE suspension having a concentration of 60 wt %.

Meanwhile, a nickel foam sheet (porosity: 95 %) having a rectangular compressed portion (length: 6 mm, width: 3 mm, depth: 0.15 mm) formed by compressing the sheet depthwise at a predetermined position was provided, and the sheet was packed with the active material paste prepared above and then dried at a temperature of 120°C for 20 minutes.

Subsequently, the thus treated sheet was immersed in a PTFE suspension having a concentration of 60 % and withdrawn therefrom, and after the sheet was dried at 100°C for 20 minutes, the active material and PTFE deposited on the compressed portion were brushed off.

The resulting sheet was subjected to rolling under a pressure of 4 ton/cm² to shape the sheet to have a thickness of 0.7 mm. The rolled sheet was then punched to provide plates having a height of 38 mm, a width of 13 mm and a thickness of 0.7 mm. Each of the plates has on each side a recess (length; 3 mm, width 3 mm, depth 0.15 mm). Then, a nickel strip is spot-welded to one of the recesses of each plate to provide an electrode.

Subsequently, 300 pieces of the electrodes were laminated, as shown in Figure 11, and a pair of wear plates 16a,16b having a length of 5 mm and a width of 5 mm were applied on the outermost electrodes respectively, and a pressure of 0.1 ton/cm² was applied to the wear plates 16a,16b to form an electrode group C.

The electrode group C was uniformly spray-coated on the surface with a PTFE suspension having a concentration as indicated in Table 2 and dried at a temperature of 80°C for 5 minutes. The pressure applied by the wear plates was then released, and the electrode group C was disassembled to give nickel electrodes B2 of the present invention.

### (2) Assembly of battery

A hydrogen absorbing alloy having the following composition: MmNi_{3.2}CO_{1.0}Al_{0.2}Mn_{0.4} (wherein Mm means a misch metal)
was pulverized into a powder having a particle size of 10 to 100 µm. To 100 g of the powder thus obtained was added 5.26 g of a PTFE powder, and the resulting mixture was kneaded to make the PTFE powder fibrous, followed by addition of 15 g of water thereto to prepare a slurry. The slurry was clad onto a punching nickel sheet (pore size: 1.5 mm, porosity 38 %, thickness 0.07 mm) on each surface and dried at a temperature of 80°C for 60 minutes, followed by rolling under a pressure of 3 ton/cm² to provide metal hydride electrodes having a thickness of 0.35 mm.

The thus obtained metal hydride electrodes, the separators as used in Examples 1 to 7 and the nickel electrodes B2 prepared above were employed to assemble a rectangular nickel-hydrogen secondary battery having a rated capacity of 600 mAh in the same manner as in Examples 1 to 7.

### (3) Examination of battery characteristics

Five hundred-cycle life test was carried out against 1,000 sets of the thus assembled batteries under the following conditions: temperature: 20°C, charging and discharging: 1 CmA, charge control: -ΔV control (-ΔV: 10 mV).

The discharge capacity at the initial stage of charging was measured, and mean values are shown in Table 2. Further, the discharge capacity after the 500 cycle life test was measured, and the thus measured value was divided by the discharge capacity at the initial stage of charging to obtain the capacity retention rate (%) which is indicated in terms of mean value in Table 2.

Further, in the process of this cycle life test, presence and absence of short-circuiting were examined by measuring the electrode voltage or by X-ray analysis to calculate the number (%) of batteries underwent short-circuiting, and the results are indicated in terms of mean values in Table 2.

For the purpose of comparison, nickel electrodes A as shown in Figure 1 were prepared without applying the fluororesin suspension to the peripheral end faces and the metal strip fixed portions 2A. The thus prepared electrodes are referred to as electrodes of Comparative Example 2.

Further, nickel electrodes were prepared by applying the fluororesin suspension by brush coating to the electrode A at the peripheral end faces 1A,1B₁,1B₂,1C only but not to the metal strip fixed portions 2A. The thus prepared electrodes are referred to as electrodes of Comparative Example 3.

Nickel-hydrogen secondary batteries were assembled in the same manner as in Example 8 to 14 except that the nickel electrodes of Comparative Example 2 or of Comparative Example 3 were employed as anodes, and battery characteristics of them were determined. The results are also shown in Table 2.

**Table 2**

| | PTFE concentration of suspension employed (wt %) | Battery characteristics | | |
|---|---|---|---|---|
| | | Charge capacity (mAh, n= 1000)) | Capacity retention rate (%, n=1000) | Short circuit percent defective (%, n=1000) |
| Example 8 | 2 | 600 | 90 | 0.1 |
| Example 9 | 5 | 600 | 95 | 0 |
| Example 10 | 10 | 600 | 95 | 0 |
| Example 11 | 20 | 600 | 97 | 0 |
| Example 12 | 30 | 600 | 97 | 0 |
| Example 13 | 50 | 600 | 97 | 0 |
| Example 14 | 60 | 580 | 97 | 0 |
| Comparative Example 2 | - | 600 | 30 | 15 |
| Comparative Example 3 | 30 | 600 | 87 | 1.0 |

The results shown in Table 2 clarify the following points.
1) The batteries incorporated with the electrodes according to the present invention all showed reduced % occurrence of short-circuiting and high capacity retention rate after the 500 cycle test compared with the batteries incorporated with the electrodes of Comparative Example 2 or 3. This demonstrates that the nickel hydroxide powder in the electrode of the present invention has not dropped out in the process of charging and discharging. In other words, this demonstrates that the effect of the fluororesin film formed to cover the peripheral end faces and the metal strip fixed portions of the electrodes was notably exhibited.
2) However, when a PTFE suspension having a concentration of 60 wt % is employed for forming the film like in the electrode of Example 14, the resulting film becomes too thick to allow the electrode reaction to take place, although dropping out of the nickel hydroxide powder may be inhibited, and besides the discharge capacity cannot satisfy the rated capacity.

Meanwhile, if a PTFE suspension having a low concentration is employed like in the electrode of Example 8, the resulting film becomes too thin to exhibit the effect of preventing the nickel hydroxide powder from dropping out, leading to an increased short-circuit percent defective and reduced capacity retention rate.

Accordingly, the concentration of the PTFE suspension to be applied to the electrode is preferably set in the range of 5 to 50 wt %.

As described above, in the electrode B2 of the present invention, dropping out of the active material carried thereon is inhibited to prevent effectively short-circuiting from occurring.

This is the effect brought about by the fluororesin thin film having water repellency and binding properties formed to cover the peripheral end faces, which are the faces appeared when a collector was cut (punched), the rims on the electrode surfaces around the peripheral end faces, the recesses to which the lead metal strips are fixed and the edges of the recesses.

Accordingly, the electrodes B1,B2 according to the present invention are useful as secondary battery electrodes having excellent charge and discharge cycle life characteristics.

It should be noted here that according to the second process of the invention, the fluororesin film which can exhibit the above-described effects can be formed on a plurality of electrodes by a single coating procedure, so that these useful electrodes can be produced under high productivity.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A secondary battery electrode comprising:
a plate-like metal foam;
a recess formed by compressing depthwise the surface of the plate-like metal foam partly at the upper end portion;
a metal strip fixed portion formed by fixing a metal strip to the recess;
an active material carried on the entire plate-like metal foam; and
a fluororesin film formed to cover at least the metal strip fixed portion.

2. The secondary battery electrode according to Claim 1, wherein the fluororesin film is formed crosswise in the form of belt at least at the upper end portion including the metal strip fixed portion.

3. The secondary battery electrode according to Claim 1, wherein the fluororesin film is formed at least on the peripheral end faces and on the metal strip fixed portion of the plate-like metal foam.

4. A process for producing a secondary battery electrode, comprising the following steps of:
packing a metal foam sheet having a compressed portion formed at a predetermined position on the surface thereof with an active material paste, followed by drying;
applying a fluororesin over the entire surface of the metal foam sheet, followed by drying;
removing the active material and the fluororesin present in the compressed portion, and rolling the resulting sheet, followed by cutting or punching of the sheet into a plate having a predetermined shape such that the plate may have a recess at one end portion;
fixing a metal strip to the recess of the plate and thus defining a metal strip fixed portion to provide an electrode; and
coating the electrode with a fluororesin crosswise in the form of belt along the end portion including the metal strip fixed portion.

5. A process for producing a secondary battery electrode, comprising the following steps of:
packing a metal foam sheet having a compressed portion formed at a predetermined position on the surface thereof with an active material paste, followed by drying;
applying a fluororesin over the entire surface of the metal foam sheet, followed by drying;
removing the active material and the fluororesin present in the compressed portion, and rolling the resulting sheet, followed by cutting or punching of the sheet into a plate having a predetermined shape such that the plate may have a recess at one end portion;
fixing a metal strip to the recess of the plate and thus defining a metal strip fixed portion to provide an electrode;
laminating a plurality of said electrodes, and applying wear plates to the electrodes locating outermost respectively, the wear plates having a size sufficient to cover the surface of the electrode, followed by application of a pressure via the wear plates to the electrodes in the direction of lamination to form an electrode group in which the electrodes are brought into intimate contact with one another; and
coating the electrode group with a fluororesin partly on the surface or over the entire surface, followed by disassembling of the group.

6. The process according to Claim 5, wherein the metal strip is covered with a removable cap when the fluororesin is applied.

7. An apparatus for coating an electrode with a fluororesin, comprising:
a lower roll and an upper roll rotatable synchronously with the lower roll, which are arranged such that the roll surface of the former and that of the latter may oppose each other;
an electrode feeder which runs carrying an electrode thereon located between the lower roll and the upper roll;
means for supplying a fluororesin suspension to the roll surface of the upper roll; and
a groove defined at least on the roll surface of the upper roll.

8. The process according to Claim 7, wherein the fluororesin suspension has a fluororesin concentration of 5 to 50 wt %.
